# DEMANDE DE BREVET EUROPEEN

(11) **EP 2 071 483 A1**
(43) Date de publication de la demande: **17.06.2009**
(21) Numéro de dépôt: 07301648.7
(22) Date de dépôt: 07.12.2007
(51) Int. Cl.: G06F 21/00, G06F 21/22

(54) **Procédé de sécurisation de l'éxécution d'un code par masquage itératifs**

(71) Demandeur: GEMPLUS, 13420 Gémenos (FR)
(72) Inventeur: Ciet, Mathieu, 13600 La Ciotat (FR); Feix, Benoît, 13600 La Ciotat (FR); Villegas, Karine, 13420 Gemenos (FR)

(57) **Abrégé**

La présente invention est un procédé de sécurisation de l'exécution d'un code informatique composé de données, ces données pouvant être, entre autre, des opérations, des opérandes, des résultats intermédiaires, ou des résultats finaux, tout ou partie de ces données, dites données sensibles, devant être masquées au cours de l'exécution, et comportant une étape de masquage, pour chacune des données sensibles l'étape de masquage est appliquée un nombre de fois strictement supérieur à un.

## Description

L'invention concerne un procédé de sécurisation de l'exécution d'un code par masquages itératifs.
L'invention porte en particulier sur le domaine de la sécurisation de l'exécution d'un ensemble de données, tel qu'un algorithme ou un programme d'ordinateur, par le masquage itératif de tout ou partie de ces éléments.

Il est apparu que les cartes à puce sont sujettes à des tentatives de piratage, notamment par des attaques par injection de fautes, des attaques à canaux cachés, ou des attaques combinant ces deux moyens.

Dans les attaques par injection de fautes, ayant pour effet une dérivation de code, un attaquant potentiel perturbe physiquement le circuit intégré de la puce, notamment par l'injection de rayons lumineux ou, d'ondes électromagnétiques. Il peut ainsi modifier le comportement de ce circuit intégré et ainsi dérouter le code logiciel vers un autre type d'exécution.

Dans les attaques dites à canaux cachés (« side-channel » en anglais), l'attaquant analyse des variables de l'environnement de la puce, comme son rayonnement électromagnétique ou sa consommation d'énergie. Il peut alors, à l'aide de procédés d'analyse et d'outils statistiques, déduire des informations secrètes qui émanent de la puce. Il est par exemple ainsi possible de retrouver une clé privée lorsque le développeur n'a pas su se prémunir correctement à l'aide de protections adéquates. De telles protections sont connues de l'homme de l'art.
La présente invention vise plus particulièrement à se prémunir contre les attaques combinées dans lesquelles une ou plusieurs injections de fautes et une ou plusieurs analyses des fuites d'informations sont utilisées. Plus particulièrement, elle vise à contrer ce type d'attaque de sorte que même si une dérivation de code a lieu, elle ne laisse pas la porte ouverte à une attaque de type à canaux cachés.

Pour éviter la réalisation et le succès de telles attaques, il est bien connu, dans des produits comprenant d'une manière générale un ou plusieurs composants électroniques et un logiciel embarqué, d'utiliser des contrôles d'intégrité sur les données manipulées et/ou de la redondance de code afin de détecter d'éventuelles perturbations. Généralement dans ces cas-là, la détection de l'erreur ne peut avoir lieu qu'une fois toutes les redondances effectuées et les comparaisons entre les différentes valeurs obtenues réalisées. C'est-à-dire, dans certains cas, lorsque tous ces calculs ont été réalisés et terminés.

Cependant, dans le cas d'attaques combinées, ce type de détection a lieu trop tard. En effet une fois la dérivation réalisée, les fuites de type à canaux cachés découlant des calculs effectués ont déjà eu lieu, et ceci avant que la détection ne soit effective (à la fin de l'exécution par les méthodes connues). Dans le cas où une faute est réalisée lors de la mise en oeuvre des contre-mesures, il est possible, pour l'attaquant, de déjouer tout ou partie des dispositifs de protection.
Une solution très usitée est le masquage de données, mais de la même façon, si un attaquant parvient à provoquer une erreur durant le masquage des données, il est envisageable que le programme poursuive son exécution, mais en manipulant des données en clair, donc des données sans la moindre protection à la vue de tous.
Le masquage de donnée est une contre mesure par laquelle la donnée masquée est modifiée, sans que ses propriétés, ni ses caractéristiques intrinsèques ne soient altérées. Ainsi, seule l'apparence de la donnée a changé. Un exemple est de remplacer le nombre « 4 » par « 2+2 ».
Dans le contexte du RSA, une telle modification peut prendre la forme du remplacement du message M par M + k*N Modulo K0*N ou K et K0 sont nombres premiers entre eux.
Dans cette relation, K et K0 sont des nombres aléatoires et N représente le module RSA.
Dans la très grande majorité des cas, le masquage des données inclut l'utilisation d'au moins un nombre aléatoire afin d'en renforcer la sécurité. Dans ce cas là on parlera de masquage par aléa ou de randomisation. Dans la suite de ce document, nous utiliserons l'expression « masquage de donnée » pour parler d'une opération destinée à changer l'apparence de la donnée en question, sans modifier ses caractéristiques, ni les résultats qui pourraient éventuellement découler lors de l'utilisation de cette donnée dans des calculs.

La présente invention vise à pallier les inconvénients des méthodes précitées afin de contrecarrer ce type d'attaques.

Pour cela, la présente invention est un procédé de sécurisation de l'exécution d'un code informatique composé de données, ces données pouvant être, entre autre, des opérations, des opérandes, des résultats intermédiaires, ou des résultats finaux, tout ou partie de ces données, dites données sensibles, devant être masquées au cours de l'exécution du code, et comportant une étape de masquage, pour chacune des données sensibles l'étape de masquage est appliquée un nombre de fois strictement supérieur à un.
Selon un mode de réalisation, pour chacune des données sensibles l'étape de masquage est appliquée un nombre de fois égal à un paramètre appelé SecParam.
La valeur du paramètre SecParam peut être commune pour toutes les données sensibles, ou bien SecParam peut avoir des valeurs différentes pour chacune des données sensibles.
Le paramètre SecParam peut par exemple être prédéfini avant l'exécution du code ou être calculé au cours d'une étape d'initialisation, préalable à l'exécution du code. Dans un autre mode de réalisation, la valeur du paramètre SecParam évolue au cours de l'exécution du code.
Dans un mode de réalisation, préalablement à l'exécution du code, le procédé comprend :
- une étape de tronçonnage consistant en une division du code en nombre de tronçons égal au paramètre SecParam, puis
- une étape d'insertion consistant en l'insertion, dans chacun des tronçons, d'une étape de masquage pour chacune des données sensibles.
   Dans un mode de réalisation, on peut associer un compteur à chacune des données sensibles.
   Il est alors possible que, au cours de l'exécution du code, préalablement à l'utilisation d'une des données sensibles, le procédé comprenne :

- une étape d'analyse consistant en la comparaison du compteur associé à la donnée sensible concernée, et la valeur du paramètre SecParam,
- une étape de décision consistant, en fonction du résultat de l'étape d'analyse, en une insertion d'une étape de masquage de la donnée sensible avant son utilisation.

D'autres caractéristiques et avantages de l'invention ressortiront clairement de la description qui en est faite ci-après, à titre indicatif et nullement limitatif, en référence aux dessins dans lesquels :
- la figure 1 représente une portion de code exécutable contenant deux données sensibles, et un exemple d'implémentation de l'invention avec un paramètre SecParam commun.
- la figure 2 représente une portion de code exécutable contenant deux données sensibles, et un exemple d'implémentation de l'invention avec un paramètre SecParam différent pour chacune des données sensibles.
- la figure 3 représente une portion de code exécutable contenant deux données sensibles, et un exemple d'implémentation de l'invention avec tronçonnage du code en trois blocs, et un masquage des données sensibles dans chacun des blocs.
- la figure 4 représente une portion de code exécutable contenant deux données sensibles et un exemple d'implémentation de l'invention avec une analyse et un choix de masquer ou non une donnée sensible à chacune de ses utilisations.

Dans l'ensemble du présent document, nous utilisons le terme de « donnée » pour parler d'un regroupement d'informations en une unité ayant un sens, c'est-à-dire que tout élément pouvant entrer dans la composition d'un code informatique exécutable est une donnée. Ainsi les variables, les constantes sont des données, mais les opérations en elles-mêmes sont aussi des données, tout comme les différents éléments de syntaxe ou de ponctuation.

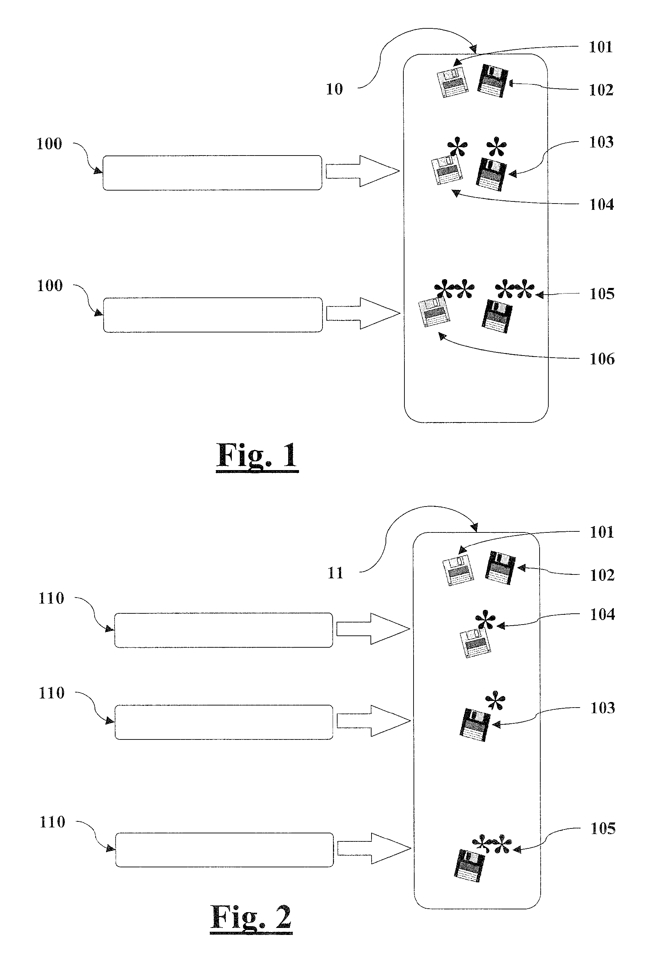

La figure 1 illustre une implémentation dans laquelle le code 10 est composé de données et les données 101 et 102 sont considérées comme sensibles. Dans cette illustration, le paramètre SecParam à une valeur fixée à deux.
La valeur de SecParam peut être fixée de manière arbitraire avant le début de l'exécution du code. Cette valeur peut aussi est être calculée dans une phase préliminaire à l'exécution du code, voire ce calcul peut être intégré en début de code. Un avantage à calculer la valeur de SecParam est de pouvoir adapter le niveau de sécurité de l'exécution du code en fonction de critères. Par exemple il est envisageable de prendre en compte l'environnement d'exécution. En effet le niveau de sécurité, symbolisé par la valeur de SecParam, peut être particulièrement élevé si le code est exécuté dans un environnement inconnu, avec un système d'exploitation inconnu, ou au contraire dans un environnement reconnu comme particulièrement à risque. A contrario, la valeur de SecParam peut se trouver réduite par la présence de signatures du support matériel d'exécution.
Un mode préféré de réalisation permet de faire varier la valeur de SecParam au cours de l'exécution du code, en fonction de critères à définir. Par exemple deux calculs qui n'aboutissent pas durant l'exécution du code peut être un critère fort de suspicion d'attaque. Ainsi, la ou les valeurs de SecParam peut être augmentée en conséquence. Une information peut aussi intervenir au cours de l'exécution et influencer sur la valeur de SecParam. Par exemple, si le code 10 est tout ou partie d'une transaction financière, le montant de la transaction peut justifier un accroissement de la sécurité et donc une augmentation de la valeur de SecParam.
Durant l'exécution du code 10, une étape de masquage 100 est insérée en deux endroits, conformément à la valeur de SecParam. L'étape de masquage 100 consiste en un masquage de l'ensemble des données sensibles. Ainsi le premier masquage va transformer les données sensibles 101 et 102, respectivement en données sensibles 104 et 103.
La deuxième étape de masquage 100 va, à son tour, transformer les données sensibles 104 et 103, respectivement en données sensibles 106 et 105.
Il est intéressant de noter les emplacements dans le code où ont été insérées les deux itérations de l'étape de masquage 100. En effet, il y a de nombreuses manières de sélectionner ces emplacements selon l'invention.
Une manière consiste à prévoir, via des marquages particuliers, dès la création du code, des emplacements particulièrement intéressants, et pouvant potentiellement accueillir des étapes de masquage. Une autre manière peut consister en l'analyse d'un code déjà créé, et en l'adjonction de marquages. Lors de l'exécution du code, il est alors envisageable de choisir, selon un quelconque algorithme, lesquels de ces points pré marqués vont réellement accueillir des étapes de masquage.
Un mode préféré d'implémentation consiste en un choix aléatoire des emplacements à chaque exécution.

Une méthode toute autre de placement des étapes de masquage est basée non plus sur un pré marquage, mais sur un choix complètement dynamique. Ainsi il n'est pas possible, en début d'exécution du code, de connaître la répartition des masquages.
Un cas particulier mérite d'être souligné, c'est celui où la valeur (ou les valeurs) de SecParam varie au cours de l'exécution du code. Ce mode de réalisation permet de mettre un oeuvre une sorte de « réaction d'urgence ». En effet, une situation détectée comme dangereuse déclenche une mise à jour du ou des paramètres SecParam, et on peut donc logiquement envisager un masquage d'urgence dès l'instant où la réaction d'urgence a été prise. Ainsi une étape de masquage de l'ensemble des données sensibles peut se trouver insérée à cet endroit du code. Il est parfaitement envisageable que cette étape de masquage particulière s'étende au-delà des données désignées comme sensibles vers tout ou partie des données du code, par sa nature de réaction face à un danger imminent.
En effet, la limitation du masquage aux seules données sensibles est généralement liée à des contraintes en terme de performance. Dans le cadre d'une réaction d'urgence, les performances n'ont plus autant d'importance face à l'attaque présente.

La figure 2 illustre un autre mode de réalisation de l'invention dans lequel le code 11 est composé de données, et les données 101 et 102 sont considérées comme sensibles. Dans cette illustration, le paramètre SecParam a une valeur par donnée sensible, fixé à un pour la donnée 101, et à deux pour la donnée 102.
Durant l'exécution du code 11, une étape de masquage 110 est insérée en trois endroits. L'étape de masquage 110 consistant en un masquage d'une donnée sensible. L'étape de masquage 110 est appliquée deux fois au cours de l'exécution à la donnée 102, et une fois à la donnée 101. Ainsi le premier masquage va transformer la donnée sensible 101 en une nouvelle donnée sensible 104. Le second masquage va transformer la donnée sensible 102 en une nouvelle donnée sensible 103. Le troisième masquage va transformer la donnée sensible 103 en une nouvelle donnée sensible 105.

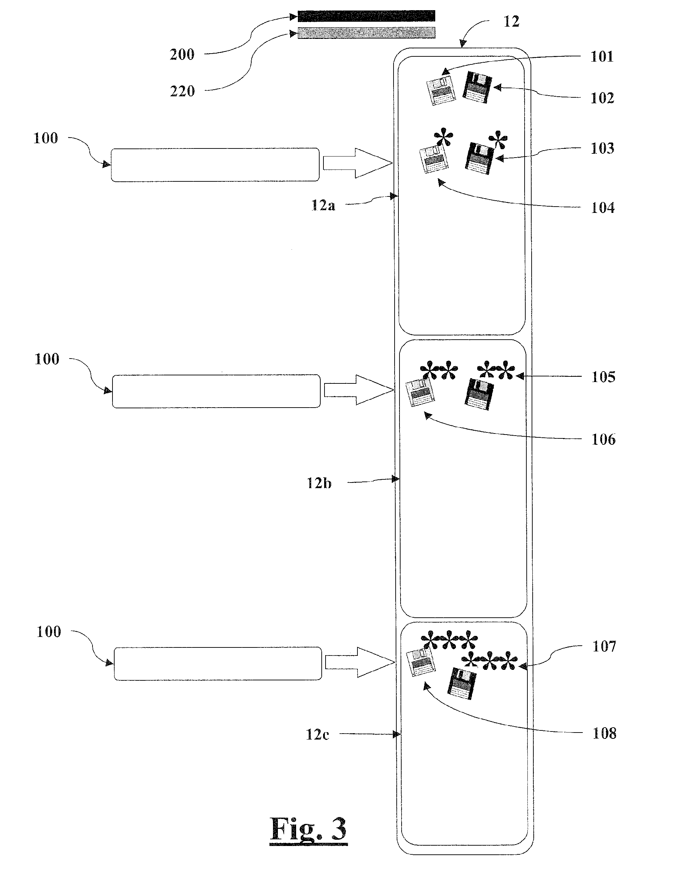

La figure 3 illustre un autre mode de réalisation de l'invention dans lequel le code 12 est composé de données, et les données 101 et 102 sont considérées comme sensibles. Dans cette illustration, le paramètre SecParam a une valeur fixée à trois. Le mode de réalisation illustré par la figure 3 comprend une étape 200, préliminaire à l'exécution du code, consistant en un tronçonnage de ce code en un nombre de tronçons égal à la valeur de SecParam. Dans notre exemple le code 12 est divisé en 3 blocs, respectivement 12a, 12b, 12c.
De plus, ce mode de réalisation comprend en outre une étape préliminaire d'insertion 220 consistant en l'insertion, dans chacun des tronçons 12a, 12b, 12c, d'une étape de masquage 100 permettant de masquer l'ensemble des données sensibles 101 et 102.

Ainsi, dans le bloc 12a, le masquage 100 va transformer les données sensibles 101 et 102, respectivement en données sensibles 104 et 103.
Dans le bloc 12b, le masquage 100 va transformer les données sensibles 104 et 103, respectivement en données sensibles 106 et 105.
Dans le bloc 12c, le masquage 100 va transformer les données sensibles 106 et 105, respectivement en données sensibles 108 et 107.
Nous noterons que ces masquages auraient peut être faits au moyen d'étapes de masquage 110 ne traitant qu'une donnée sensible à la fois. Une telle étape de masquage aurait dû être insérée, dans chaque tronçon, une fois pour chaque donnée sensible.

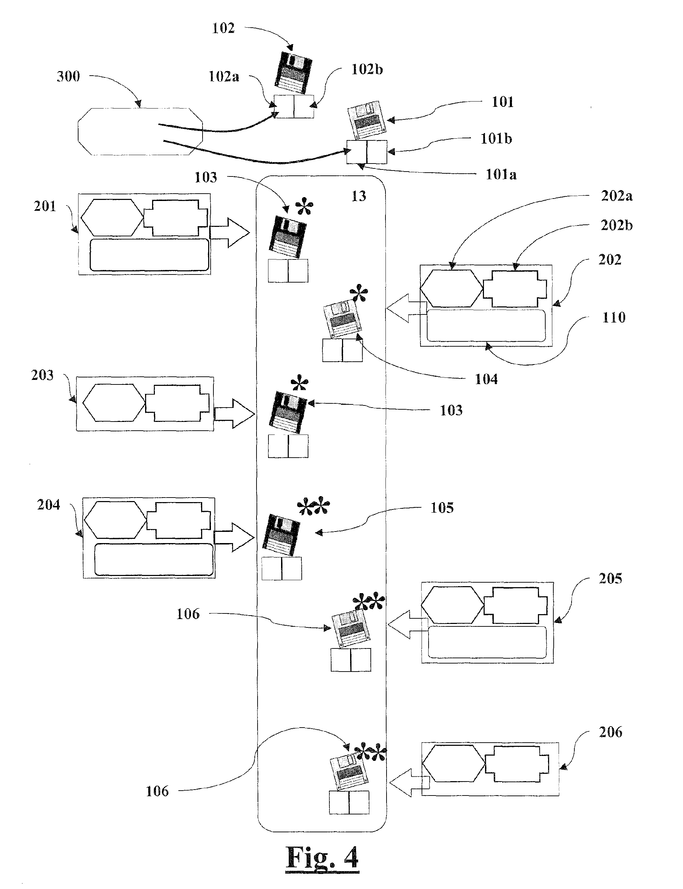

La figure 4 illustre un autre mode de réalisation de l'invention dans lequel le code 13 est composé de données, et les données 101 et 102 sont considérées comme sensibles. Dans cette illustration chaque donnée sensible 101, 102, se voit affecter une valeur de SecParam, 101a, 102a, et un compteur 101b, 102b, contenant une information sur le nombre de masquages déjà appliqués à la donnée sensible considérée.
Dans une étape 300, préliminaire à l'exécution du code, les valeurs de SecParam sont affectées à chacune des données sensibles, et leurs compteurs respectifs sont initialisés.
Dans ce mode de réalisation, préalablement à toute utilisation d'une donnée sensible, un ensemble d'étapes 201, 202, 203, 204, 205, 206, est réalisé. Dans cet ensemble d'étapes, une étape d'analyse 202a va comparer la valeur du paramètre SecParam associé à la donnée sensible sur le point d'être utilisée, et la valeur de son compteur. Cette étape d'analyse est immédiatement suivie d'une étape 202b de décision qui, en fonction du résultat de l'étape précédente, décide s'il faut insérer une étape de masquage 110 de la donnée sensible sur le point d'être utilisée, et mettre à jour le compteur associé.
Ainsi, avant chaque utilisation des données sensibles, cet ensemble d'étapes est présent.
Ainsi, à la première utilisation de la donnée 102, les procédures 201 s'enchaînent pour aboutir au masquage de la donnée 102 qui devient la donnée sensible 103.
A la première utilisation de la donnée 101, les procédures 202 s'enchaînent pour aboutir au masquage de la donnée 101 qui devient la donnée sensible 104.
A la deuxième utilisation de la donnée 102 (sous sa forme masquée 103), les procédures 203 s'enchaînent pour aboutir à un maintien de la donnée sans masquage supplémentaire.
A la troisième utilisation de la donnée 102 (toujours sous sa forme masquée 103), les procédures 204 s'enchaînent pour aboutir au masquage de la donnée 103 qui devient la donnée sensible 105.
A la deuxième utilisation de la donnée 101 (sous sa forme masquée 104), les procédures 205 s'enchaînent pour aboutir au masquage de la donnée 104 qui devient la donnée sensible 106.
A la troisième utilisation de la donnée 101 (sous sa forme masquée 106), les procédures 206 s'enchaînent pour aboutir à un maintien de la donnée sans masquage supplémentaire.
Ce mode de réalisation est le plus souple car c'est celui qui a la plus grande modularité en fonction des données sensibles protégées. Il est particulièrement efficace lorsqu'il est combiné avec une mise à jour dynamique des valeurs du paramètre SecParam.

## Revendications

1. Procédé de sécurisation de l'exécution d'un code informatique composé de données, lesdites données pouvant être, entre autre, des opérations, des opérandes, des résultats intermédiaires, ou des résultats finaux, tout ou partie desdites données, dites données sensibles, devant être masquées au cours de ladite exécution,
**caractérisé en ce qu'**il comporte une étape de masquage,
pour chacune desdites données sensibles ladite étape de masquage est appliquée un nombre de fois strictement supérieur à un.

2. Procédé de sécurisation selon la revendication 1,
**caractérisé en ce que**, pour chacune desdites données sensibles, ladite étape de masquage est appliquée un nombre de fois égal à un paramètre dit SecParam.

3. Procédé de sécurisation selon la revendication 2,
**caractérisé en ce que** la valeur dudit paramètre SecParam est commune pour toutes lesdites données sensibles.

4. Procédé de sécurisation selon la revendication 2,
**caractérisé en ce que** ledit paramètre SecParam a des valeurs différentes pour chacune desdites données sensibles.

5. Procédé de sécurisation selon l'une des revendications 2 à 4, **caractérisé en ce que** ledit paramètre SecParam est prédéfini avant l'exécution dudit code.

6. Procédé de sécurisation selon l'une des revendications 2 à 4, **caractérisé en ce que** ledit paramètre SecParam est calculé au cours d'une étape d'initialisation, préalable à l'exécution dudit code.

7. Procédé de sécurisation selon l'une des revendications 2 à 4, **caractérisé en ce que** la valeur dudit paramètre SecParam évolue au cours de l'exécution dudit code.

8. Procédé de sécurisation selon l'une des revendications 2 à 7, **caractérisé en ce que,** préalablement à l'exécution dudit code, il comprend :
- une étape de tronçonnage consistant en une division dudit code en nombre de tronçons égal audit paramètre SecParam, puis
- une étape d'insertion consistant en l'insertion, dans chacun desdits tronçons, une étape de masquage pour chacune desdites données sensibles.

9. Procédé de sécurisation selon l'une des revendications 2 à 7, **caractérisé en ce qu'**on associe un compteur à chacune desdites données sensibles.

10. Procédé de sécurisation selon la revendication 9,
**caractérisé en ce que,** au cours de l'exécution dudit code, préalablement à l'utilisation d'une desdites données sensibles, il comprend :
- une étape d'analyse consistant en la comparaison dudit compteur associé à ladite donnée sensible, et la valeur du paramètre SecParam,
- une étape de décision consistant, en fonction du résultat de l'étape d'analyse, décider s'il faut insérer une étape de masquage de ladite donnée sensible avant l'utilisation de ladite donnée sensible par ledit code.
